# EUROPEAN PATENT APPLICATION

(11) **EP 1 760 568 A2**
(43) Date of publication of application: **07.03.2007**
(21) Application number: 06119199.5
(22) Date of filing: 18.08.2006
(51) Int. Cl.: G06F 1/30

(54) **Electronic apparatus and control method of the driving voltage**

(30) Priority: 19.08.2005 KR 20050076430
(71) Applicant: Samsung Electronics Co., Ltd., Suwon-si, Gyeonggi-Do (KR)
(72) Inventor: LEE, Jin-hyung, Daewoo Apt. 206-706, Hogye-dong, Gyeonggi-do (KR); LEE, Sang-hoon, , Ulsan-city (KR); YANG, Joon-hyun, Unam Firstvill Apt. 208-303, Gyeonggi-do (KR); LEE, Kyoung-geun, Dongsuwon LG Village, Suwon-si, Gyeonggi-do (KR)
(74) Representative: Perkins, Dawn Elizabeth

(57) **Abstract**

An electronic apparatus and method of controlling the electronic apparatus are provided, in which a power supply supplies a driving voltage to a system; and a controller sequentially outputs a control signal controlling a level of the driving voltage to the power supply until a level of a usage voltage corresponding to the driving voltage in the system becomes substantially identical to a predetermined reference level, if the level of the usage voltage is not substantially identical to the reference level. Accordingly, the electronic apparatus and control method thereof automatically adjusts a size of driving power supplied to respective parts of the electronic apparatus.

## Description

The present invention relates to an electronic apparatus and a control method thereof. More particularly, the present invention relates to an electronic apparatus having an improved power supply which supplies a driving voltage to respective parts of the electronic apparatus, and a control method thereof.

Generally, a power supply, such as a switching mode power supply (SMPS) circuit rectifies alternating current (AC) power to convert into direct current (DC) power. Then, a switch converts the DC power into square wave AC power and rectifies the AC power to stabilize output power. The power supply supplies the stabilized output power (hereinafter, to be referred to as driving power) to respective parts of an electronic apparatus.

The power supply provided in a conventional electronic apparatus comprises a variable resistor. The resistance of the variable resistor is adjusted to control the driving power output from the power supply. In the conventional electronic apparatus, a user should adjust the variable resistor manually to adjust the resistance thereof.

Accordingly, there is a need for an improved power supply that automatically adjusts its driving power output.

An aspect of exemplary embodiments of the present invention is to address at least the above problems and/or disadvantages and to provide at least the advantages described below. Accordingly, an aspect of exemplary embodiments of the present invention is to provide an electronic apparatus which automatically adjusts a size of driving power supplied to respective parts of the electronic apparatus, and a control method thereof.

The foregoing and/or other aspects of exemplary embodiments of the present invention are also achieved by providing an electronic apparatus, comprising: a system for displaying an image; a power supply for supplying a driving voltage to the system; and a controller for sequentially outputting a control signal controlling a level of the driving voltage to the power supply until a level of a usage voltage corresponding to the driving voltage in the system becomes substantially identical to a reference level, if the level of the usage voltage is not substantially identical to the reference level.

According to another aspect of an exemplary embodiment of the present invention, the apparatus further comprises a memory for storing a level of the control signal and the level of the usage voltage corresponding to the control signal, wherein the controller renews the level of the usage voltage corresponding to the control signal stored in the memory, if the level of the usage voltage is not substantially identical to the reference level.

According to another aspect of an exemplary embodiment of the present invention, the controller detects the level of the usage voltage a number of times and compares an average level of the detected usage voltage and the reference level.
According to another aspect of an exemplary embodiment of the present invention, the controller stores the level of the usage voltage and the level of the control signal in the memory, if the average level of the usage voltage is substantially identical to the reference level, and outputs the control signal to the power supply based on the stored level.

According to another aspect of an exemplary embodiment of the present invention, the system comprises a display unit, and the usage voltage comprises a voltage supplied to the display unit.

According to another aspect of an exemplary embodiment of the present invention, the power supply further comprises a switch, the control signal comprises a pulse width modulation signal, and the switch is switched on and off by the control signal to adjust the level of the driving voltage.

The foregoing and/or other aspects of exemplary embodiments of the present invention are also achieved by providing an electronic apparatus, comprising: a system for displaying an image; a power supply for outputting a driving voltage to the system; and a controller for sequentially outputting a control signal controlling a level of the driving voltage to the power supply until the level of the driving voltage becomes substantially identical to a reference level, if the level of the driving voltage is not substantially identical to the reference level.

According to another aspect of an exemplary embodiment of the present invention, the apparatus further comprises a memory for storing a level of the control signal and the level of the driving voltage corresponding to the control signal, wherein the controller renews the level of the driving voltage corresponding to the control signal stored in the memory, if the level of the driving voltage is not substantially identical to the reference level.

The foregoing and/or other aspects of exemplary embodiments of the present invention are also achieved by providing a method of controlling an electronic apparatus, comprising: outputting a driving voltage to a system; determining whether a level of a usage voltage corresponding to the driving voltage in the system is substantially identical to a reference level; and sequentially outputting a control signal to control a level of the driving voltage until the level of the usage voltage becomes substantially identical to the reference level, if the level of the usage voltage is not substantially identical to the reference level.

According to another aspect of an exemplary embodiment of the present invention, the method further comprises: storing a level of the control signal and the level of the usage voltage corresponding to the control signal; and renewing the level of the usage voltage corresponding to the control signal stored in the memory, if the level of the usage voltage is not substantially identical to the reference level.

According to another aspect of an exemplary embodiment of the present invention, the method further comprises: detecting the level of the usage voltage a number of times; and comparing an average level of the detected usage voltage and the reference level.

According to another aspect of an exemplary embodiment of the present invention, the method further comprises: storing the level of the usage voltage and the level of the corresponding control signal stored in the memory, if the average level of the usage voltage is substantially identical to the reference level; and outputting the stored control signal to the power supply.

The foregoing and/or other aspects of exemplary embodiments of the present invention are also achieved by providing a method of controlling an electronic apparatus, comprising: outputting a driving voltage to a system; determining whether a level of the driving voltage is substantially identical to a reference level; and sequentially outputting a control signal to control the level of the driving voltage until the level of the driving voltage becomes substantially identical to the reference level, if the level of the driving voltage is not substantially identical to the reference level.

According to another aspect of an exemplary embodiment of the present invention, the method further comprises: storing a level of the control signal and the level of the driving voltage corresponding to the control signal; and renewing the level of the driving voltage corresponding to the stored control signal, if the level of the driving voltage is not substantially identical to the reference level.

The above and other features, and advantages of certain exemplary embodiments of the present invention will be more apparent from the following description taken in conjunction with the accompanying drawings, in which:
Figure 1 is a control block diagram of an electronic apparatus according to an exemplary embodiment of the present invention; and
Figure 2 is a control flowchart of the electronic apparatus according to an exemplary embodiment of the present invention.
Throughout the drawings, the same drawing reference numerals will be understood to refer to the same elements, features, and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

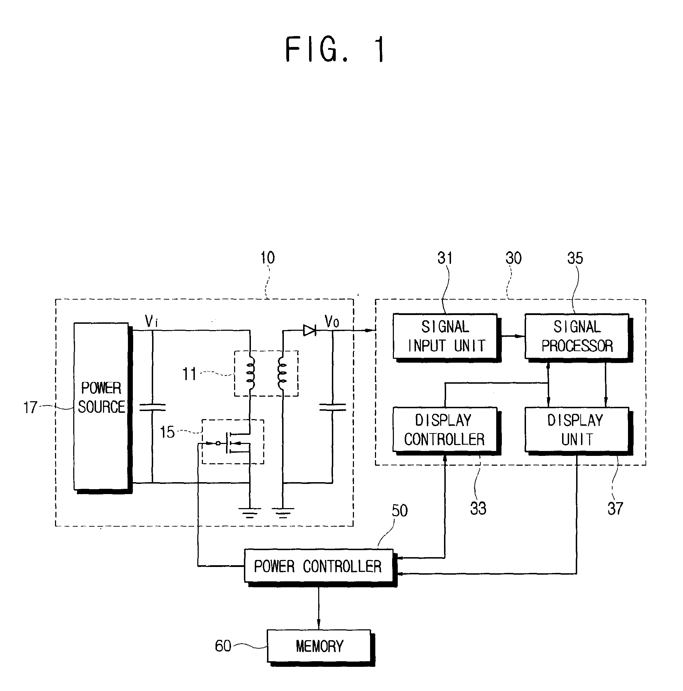

As shown in Figure 1, an electronic apparatus according to an exemplary embodiment of the present invention comprises a system 30 and power supply 10 to supply power to the system 30.

The power supply 10 comprises a power source 17 to convert an AC voltage into a DC voltage; a voltage converter 11 to adjust a level of the voltage input from the power source 17; and a switch 15.

The power source 17 converts the AC voltage input through an adaptor into the DC voltage to output the DC voltage to the voltage converter 11.

The voltage converter 11 adjusts a level of a voltage Vi input from the power source 17. For example, the voltage converter 11 may comprise a transformer. A voltage supplied to both ends of a primary induction coil of the transformer is proportional to a coil ratio to be induced to a secondary induction coil. Here, the secondary induction coil is inductively coupled to the primary induction coil. The secondary induction coil may comprise a plurality of induction coils which have different coil ratios according to a level of a voltage desired to be output. The voltage output from the secondary induction coil is smoothed by a capacitor C1 to be supplied to the system 30 as a driving voltage Vo.

The switch 15 is switched on and off to supply the power output from the power source 17 to the power converter 11. Thus, the level of the voltage Vi supplied to the power converter 11 is adjusted by a switching operation of the switch 15, and also the level of the driving voltage Vo output from the power converter 11 is adjusted. As shown in Figure 1, the switch 15 preferably comprises a transistor, but not limited thereto. Alternatively, the switch 15 may vary as long as it performs the switching operation such as a relay.

The respective parts of the system 30 are driven by the driving voltage Vo output from the power supply 10.

A display apparatus will be described as an example of the electronic apparatus according to an exemplary embodiment of the present invention.

The system 30 comprises a signal input unit 31 which receives an image signal from an external image source; a signal processor 35 which processes the image signal received through the signal input unit 31; and a display unit 37 which displays an image based on the image signal processed by the signal processor 35.

The signal input unit 31 receives the image signal from the external image source. The signal input unit 31 may comprise a tuner (not shown) and an input terminal (not shown). The signal input unit 31 receives the image signal from the external image source such as a broadcasting station, a DVD and a camcorder. If the external image source is a broadcasting station, the signal input unit 31 comprises the tuner. In an exemplary implementation, the tuner tunes the image signal received through an antenna into an image signal having a corresponding frequency band according to a tuning control signal.

That is, the tuner tunes the image signal corresponding to a channel displayed on the display unit 37, among the plurality of image signals received through the antenna, to be output to the signal processor 35.

The signal processor 35 decodes the image signal received from the signal input unit 31, and converts the decoded image signal into a signal displayable by the display unit 37 to be supplied thereto.

The display unit 37 comprises a display module (not shown) to display the image thereon; and a module driver (not shown) to process the image signal input from the signal processor 35 and to display the image on the display module (not shown).

The display module according to an exemplary embodiment of the present invention may vary by including at least one of a digital light processing (DLP), a liquid crystal display (LCD) and a plasma display panel (PDP).

The power controller 50 determines a level of a usage voltage used in the system 30, and determines whether the level of the usage voltage is substantially identical to a predetermined reference level. If the level of the usage voltage is determined to not be substantially identical to the reference level, the power controller 50 controls the power supply 10 to make the level of the usage voltage substantially identical to the reference level.

For example, the power controller 50 detects the level of the usage voltage a predetermined number of times, and calculates an average level of the detected usage voltage. At this time, the average level may be calculated by summing the levels of the detected usage voltages and dividing the levels by the detected number of times, or may be calculated by an average of the remaining usage voltages except the highest value and the lowest value from the detected usage voltage levels. Further, the average level may be calculated by various methods including calculating a value having a highest frequency of use among the detected usage voltage levels.

A display controller 33 controls respective parts of the system 30 to display the image on the display unit 37.

A memory 60 stores the level of the usage voltage and the level of the control signal corresponding to the usage voltage. Accordingly, the memory 60 stores the level of the usage voltage and the level of the control signal as a look up table, but not limited thereto.

The power controller 50 determines whether the reference level is substantially identical to the average level of the usage voltage if an automatic voltage mode is set to adjust the usage voltage. In an exemplary implementation, the automatic voltage mode may be set by a predetermined period, or by a user's adjustment through a user selection unit (not shown). If determined that the reference level is substantially identical to the average level of the usage voltage, the power controller 50 outputs the control signal corresponding to the average level to the power supply 10, and adjusts a level of a driving voltage Vo output from the power supply 10.

The power controller 50 outputs the control signal corresponding to the usage voltage stored in the memory 30 to the switch 15 of the power supply 10. A switching operation of the switch 15 is then controlled to adjust the level of the driving voltage Vo by the control signal. As the control signal remains the same, the level of the driving voltage Vo is maintained. Also, the usage voltage used in the respective parts of the system 30 is generated corresponding to the driving voltage Vo.

If the power controller 50 determines that the reference level is not substantially identical to the average level of the usage voltage, the level of the current usage voltage, which is not substantially identical thereto, and the level of the corresponding control signal are stored in the memory 60. The power controller 50 then controls the level of the control signal and calculates the average level of the usage voltage corresponding to the controlled control signal with the foregoing methods to compare the average level of usage voltage with the reference level.

After repeating a foregoing level revision process until the average level of the usage voltage becomes substantially identical to the reference level, the power controller 50 stores the substantially identical average level and the level of the corresponding control signal in the memory 60, if the average level of the usage voltage is substantially identical to the reference level. The power controller 50 then outputs the control signal to the switch 15. The power supply 10 generates the driving voltage Vo based on the control signal. Then, the usage voltage corresponding to the driving voltage Vo is generated from the system 30 to be supplied to the respective parts.

The power controller 50 may output a signal informing an execution of the foregoing automatic voltage mode, to the display controller 33. The display controller 33 may control the signal processor 35 to display information regarding the execution of the automatic voltage mode on the display unit 37 through a signal of the power controller 50. In this instance, the power controller 50 may control the display unit 37 to display a stop image or a fixed pattern thereon during the level revision process. The stop image or the fixed pattern is displayed on the display unit 37 to maintain a load constantly as the load becomes different according to an image change to modify the usage voltage when a moving picture is displayed on the display unit 37.

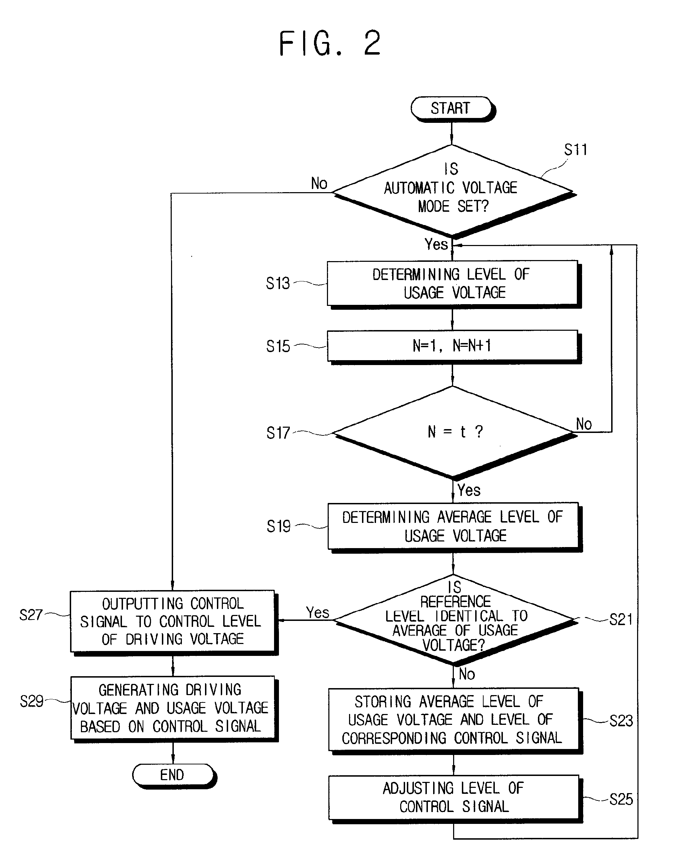

As shown in Figure 2, in the electronic apparatus according to an exemplary embodiment of the present invention, when the automatic voltage mode is set at operation S11, the power controller 50 detects the level of the current usage voltage at operation S13. The power controller 50 detects the level of the usage voltage the predetermined number of times at operations S15 and S17, and then calculates the average level of the detected usage voltage at operation S19.

The power controller 50 compares the average level of the usage voltage and the predetermined reference level. If the average level of the usage voltage is substantially identical to the reference voltage at operation S21, the power controller 50 continuously outputs the control signal being currently output to the switch 15 of the power supply 10 at operation S27. If the average level of the usage voltage and the level of the control signal are not stored in the memory 60 or incorrectly stored therein, the levels may be stored in the memory 60 again. The power supply 10 generates the driving voltage Vo based on the input control signal to output the voltage Vo. The system 30 generates the usage voltage corresponding to the driving voltage Vo to supply the usage voltage to the respective parts at operation S29.

The power controller 50 compares the average level of the usage voltage with the predetermined reference level. If the average level of the usage voltage is not substantially identical to the reference level at operation S21, the power controller 50 stores the average level of the current usage voltage and the level of the corresponding control signal in the memory 60 at operation S23. Also, the power controller 50 controls the level of the control signal to output the control signal to the switch 15 at operation S25. The power controller 50 may control the level of the control signal by a preset difference or may control the level of the control signal in a sequence by which the level of the control signal is stored in the look up table to output the level of the control signal. The usage voltage is then generated again based on the controlled control signal, and the power controller 50 repeats the process of detecting the level of the regenerated usage voltage at operation S13. The power controller 50 repeats the foregoing process until the level of the usage voltage becomes substantially identical to the reference level.

If the automatic voltage mode is set, the power controller 50 may output to the display controller 33 a signal informing of a setting of the automatic voltage mode. The display controller 33 then displays the fixed pattern or the stop image on the display unit 37 to maintain the load of the usage voltage constant. If the automatic voltage mode is set, the display controller 33 may control the signal processor 35 to display information regarding the setting of the automatic voltage mode, and an identity of the level of the usage voltage and the reference voltage.

The respective parts of the system 30 may use voltages in different levels as necessary. If the respective parts use the voltage in the same level, the level of the voltage supplied to the respective parts may become different due to a voltage loss. Thus, the usage voltage may comprise a usage voltage which is supplied to and drives the display unit 37; a usage voltage which is supplied to and drives the decoder of the signal processor 35; and a usage voltage which is supplied to and controls the signal input unit 31. Also, the usage voltage may comprise the driving voltage Vo which is output from the power supply 10.

As described above, the electronic apparatus according to an exemplary embodiment of the present invention controls the level of the control signal using software according to a control of the power controller 50, for example, a microcomputer, thereby increasing user's convenience.

In the foregoing exemplary embodiments, the display apparatus comprising the system 30 and the display unit 37 is provided as an example of the electronic apparatus according to exemplary embodiments of the present invention. Alternatively, the electronic apparatus according to the present invention may vary as long as the electronic apparatus comprises the power supply 10. The electronic apparatus may comprise various electronic apparatuses, such as, a computer, microwave oven and refrigerator, as well as a display apparatus such as a TV and a monitor.

While the invention has been shown and described with reference to certain exemplary embodiments thereof, it will be understood by those skilled in the art that various changes in form and details may be made therein without departing from the scope of the invention as defined in the appended claims and their equivalents.

## Claims

1. An electronic apparatus, comprising:
a system (30) for displaying an image;
a power supply (10) for supplying a driving voltage (Vₒ) to the system (30); and
a controller (50) for sequentially outputting a control signal controlling a level of the driving voltage (Vₒ) until a level of a usage voltage in the system (30) becomes substantially identical to a reference level, if the level of the usage voltage is not substantially identical to the reference level.

2. The apparatus according to claim 1, further comprising a memory (60) for storing a level of the control signal and the level of the usage voltage corresponding to the control signal,
wherein the controller (50) renews the level of the usage voltage corresponding to the control signal stored in the memory, if the level of the usage voltage is not substantially identical to the reference level.

3. The apparatus according to claim 2, wherein the controller (50) detects the level of the usage voltage a plurality of times and compares an average level of the detected usage voltage and the reference level.

4. The apparatus according to claim 3, wherein the controller (50) stores the level of the usage voltage and the level of the control signal in the memory (60), if the average level of the usage voltage is substantially identical to the reference level, and outputs the control signal to the power supply (10) based on the stored level.

5. The apparatus according to any one of the preceding claims, wherein the system (30) comprises a display unit (37), and
the usage voltage comprises a voltage supplied to the display unit (37).

6. The apparatus according to any one of the preceding claims, wherein the power supply (10) further comprises a switch (15),
the control signal comprises a pulse width modulation signal, and
the switch (15) is switched on and off by the control signal to adjust the level of the driving voltage (Vₒ).

7. The apparatus according to claim 6, wherein the power supply (10) comprises a transformer (11), wherein the switch (15) switches on and off an input voltage (Vᵢ) to a primary coil of the transformer (11) and the driving voltage (Vₒ) is a voltage induced in a secondary coil of the transformer (11).

8. An electronic apparatus, comprising:
a system (30) for displaying an image;
a power supply (10) for outputting a driving voltage (Vₒ) to the system (30); and
a controller (50) for sequentially outputting a control signal controlling a level of the driving voltage (Vₒ) until the level of the driving voltage (Vₒ) becomes substantially identical to a reference level, if the level of the driving voltage (Vₒ) is not substantially identical to the reference level.

9. The apparatus according to claim 8, further comprising a memory (60) for storing a level of the control signal and the level of the driving voltage (Vₒ) corresponding to the control signal,
wherein the controller (60) renews the level of the driving voltage corresponding to the control signal stored in the memory (60), if the level of the driving voltage (Vₒ) is not substantially identical to the reference level.

10. A method of controlling an electronic apparatus, comprising:
outputting a driving voltage (Vₒ) to a system (30);
determining whether a level of a usage voltage in the system (30) is substantially identical to a reference level; and
sequentially outputting a control signal to control a level of the driving voltage (Vₒ) until the level of the usage voltage becomes substantially identical to the reference level, if the level of the usage voltage is not substantially identical to the reference level.

11. The method according to claim 10, further comprising:
storing a level of the control signal and the level of the usage voltage corresponding to the control signal in a memory (60); and
renewing the level of the usage voltage corresponding to the control signal stored in the memory (60), if the level of the usage voltage is not substantially identical to the reference level.

12. The method according to claim 11, further comprising:
detecting the level of the usage voltage a plurality of times; and
comparing an average level of the detected usage voltage and the reference level.

13. The method according to claim 12, further comprising:
storing the level of the usage voltage and the level of the corresponding control signal stored in the memory (60), if the average level of the usage voltage is substantially identical to the reference level; and
outputting the stored control signal to control the level of the driving voltage (Vₒ).

14. A method of controlling an electronic apparatus, comprising:
outputting a driving voltage (Vₒ) to a system (30);
determining whether a level of the driving voltage (Vₒ) is substantially identical to a reference level; and
sequentially outputting a control signal to control the level of the driving voltage (Vₒ) until the level of the driving voltage (Vₒ) becomes substantially identical to the reference level, if the level of the driving voltage (Vₒ) is not substantially identical to the reference level.

15. The method according to claim 14, further comprising:
storing a level of the control signal and the level of the driving voltage (Vₒ) corresponding to the control signal; and
renewing the level of the driving voltage corresponding to the stored control signal, if the level of the driving voltage (Vₒ) is not substantially identical to the reference level.
